(19) Europäisches Patentamt
European Patent Office
Office européen des brevets

(11) EP 3 989 021 A1

(12) **EUROPEAN PATENT APPLICATION**

(43) Date of publication:
**27.04.2022 Bulletin 2022/17**

(21) Application number: **20203212.4**

(22) Date of filing: **22.10.2020**

(51) International Patent Classification (IPC):
**G05B 19/418** (2006.01)     **G05B 13/02** (2006.01)

(52) Cooperative Patent Classification (CPC):
**G05B 19/4183; G06F 16/9024; G06Q 50/04;**
G05B 13/027; G05B 19/41885

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Hildebrandt, Marcel**
  **80634 München (DE)**
• **Mogoreanu, Serghei**
  **81827 München (DE)**
• **Schultze, Florian**
  **90478 Nürnberg (DE)**

(54) **DETERMINING AT LEAST ONE OUTPUT LABEL FOR AN INPUT UNIT OF A TECHNICAL SYSTEM**

(57) The invention is directed to a Computer-implemented method for determining at least one output label for an input unit of a technical system; comprising the steps: a. Providing a graph data base representation (S1); wherein the graph data base representation represents a plurality of nodes in a graph which are interconnected by respective edges; wherein each node of the plurality of the nodes represents a unit of the technical system and is assigned to at least one node feature; wherein each edge of the plurality of the edges represents a relationship between the units; b. Extending the graph database representation with the received input unit (S2); c. Providing a plurality of labels (S3); d.

Generating an embedding for each node of the plurality of nodes using a machine learning algorithm based on the respective at least one node and corresponding at least one node feature (S4); e. Generating a joint embedding for each label of the plurality of labels using a pooling operator based on the generated embeddings (S5); f.

Determining a classification score for each label of the plurality of labels based on the respective embedding of the input unit and the generated joint embeddings (S6); wherein the classification score indicates how likely it is to assign the input unit to the regarded label; and g. Providing the plurality of labels as output labels with their corresponding scores (S7). Further, the invention relates to a computing unit and a computer program product.

EP 3 989 021 A1

**Description**

1. Technical field

The present invention relates to a computer-implemented method for determining at least one output label for an input unit of a technical system. Further, the invention relates to a corresponding computing unit and computer program product.

2. Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used term. It has become not only a major part of today's industry, but it also drives the business in many industrial domains.

Considering complex industrial plants, the industrial plants usually comprise distinct components, parts, modules or units with a multiplicity of individual functions. Exemplary units include sensors and actuators. The units and their functions have to be controlled and regulated in an interacting manner. They are often monitored, controlled and regulated by automation systems, for example the SIMATIC system of Siemens AG. The units can either exchange data directly with one another or communicate via a bus system. The units are connected to the bus system via parallel or, more often, serial interfaces.

The increasing degree of digitalization allows for manufacturing or industrial installation of products in a production line of the industrial plant to be performed by robot units or other autonomous units in an automatic manner and thus efficiently at least in part up to now.

However, with the increasing degree of digitalization the configuration of the industrial plant remains a challenge since it is a complex and time-consuming task.

According to prior art, usually, the configuration is performed manually relying on domain-specific knowledge. Alternatively, configuration software such as TIA ("Totally Integrated Automation") Selection Tool is used. The disadvantage of the TIA Selection Tool is that the user must manually enter all the parameters of the configured products. For example, environmental conditions, mounting position, equipment-, reference- identifiers and many more parameters have to be entered by the user.

It is common for engineers performing the aforementioned configuration task to structure the units in accordance with their functional role within the industrial plant and the physical location that is planned for them - often, according to an electrotechnical standard IEC 81346. This standard specifies certain structuring criteria, accordingly functional and local aspects, which are used as labels for the units. Upon adding a new unit to the system or extending the system with a new unit, the user can label it with one of the structuring criteria. However, this manual labelling relies on user experience and is thus error-prone as well as time-consuming.

It is therefore an objective of the invention to provide a computer-implemented method for determining at least one output label for an input unit of a technical system in an efficient and reliable manner.

3. Summary of the invention

This problem is according to one aspect of the invention solved by a computer-implemented method for determining at least one output label for an input unit of a technical system; comprising the steps:

a. Providing a graph data base representation; wherein
the graph data base representation represents a plurality of nodes in a graph which are interconnected by respective edges; wherein
each node of the plurality of the nodes represents a unit of the technical system and is assigned to at least one node feature; wherein
each edge of the plurality of the edges represents a relationship between the units;

b. Extending the graph database representation with the received input unit;

c. Providing a plurality of labels;

d. Generating an embedding for each node of the plurality of nodes using a machine learning algorithm based on the respective at least one node and corresponding at least one node feature;

e. Generating a joint embedding for each label of the plurality of labels using a pooling operator based on the generated embeddings;

f. Determining a classification score for each label of the plurality of labels based on the respective embedding of the input unit and the generated joint embeddings; wherein the classification score indicates how likely it is to assign the input unit to the regarded label; and

g. Providing the plurality of labels as output labels with their corresponding scores.

Accordingly, the invention is directed to a computer-implemented method for determining at least one output label for an input unit of a technical system.

Thereby, the technical system can be any technical system, such as engineering system. Preferably, the technical system is designed in context of industry and is an industrial plant. The technical system comprises respective units or components. The units may differ depending on the underlying system. Referring to the industrial plant, the industrial plant comprises e.g. sensors, actuators and controllers as units. The output label can be a reference location or reference designation in the sense of a physical location, which is determined as output label for the input unit of the technical system.

In the first step a., the graph database representation is provided or received as input for the next method steps. Thereby, the graph database can be any graph such as a knowledge graph with nodes representing the entities or units and edges representing the relationships, connections or links. Each node is assigned to a single node feature or to a plurality of node features. Moreover, in the second step b. the input unit is also provided and added as new node to the graph database representation.

In other words, the node features are provided as additional input. These features describe the units. This way, context information can be considered. These node features can be referred to as attributes or features of the units e.g. meta-data.

The links or relationships between the units in the graph database representation are formalized using a similarity measure. Nodes which are similar enough are linked together.

Further, in step c., a plurality of labels, preferably reference locations are provided. In the next steps d. and e. embeddings are determined which are used as input for step f. In more detail, a machine learning model generates an embedding for every unit that has already been added to the technical system. Further, a pooling mechanism is used to generate a common embedding for every label.

Then, the input label is scored against the embeddings of all labels.

In the last step, the plurality of labels is provided with their corresponding scores.

The advantage of the present invention is that the aforementioned method allows the determination of the output label in an efficient and reliable manner. This determination can not only be used as part of the configuration software to support the engineer performing the configuration of an industrial engineering solution, but also to automatically find the optimal reference designation assignment for the unit.

Contrary to prior art, the present method is data-driven, hence more scalable and not reliant on manually defined rules which require vast amounts of expert knowledge to formulate and maintain. When provided with sufficiently rich contextual information and enough training examples, the method allows for the discovery of substantially more complex dependencies among the units, than those that can be easily specified by the domain experts.

In one aspect the graph database representation is a knowledge graph, preferably k-nearest neighbor (KNN) graph. In another aspect the machine learning algorithm is a graph neural network (GNN).

In another aspect the method further comprises the step ranking the plurality of output labels in accordance with their respective scores.

In another aspect the method further comprises the step displaying the ranked plurality of output labels on a display unit to a user for selecting a target label of the ranked plurality of output labels and assigning the target label of the ranked plurality of output labels to the input unit.

In another aspect the method further comprises the step assigning a target label of the ranked plurality of output labels to the input unit of the technical system.

In another aspect the target label with the highest classification score of the ranked plurality of output labels is assigned to the input unit of the technical system.

In another aspect the method further comprises the step allocating the input unit to the assigned target location.

Accordingly, the input data, data of intermediate method steps and/or resulting output data in form of the output labels can be further handled. One or more actions can be performed. The action can be equally referred to as measure. These actions can be performed by one or more technical units, such as computing unit or robot unit. The actions can be performed gradually or simultaneously.

Exemplary actions are outputting the output labels, storing the output labels, displaying the output labels on a display unit and transmitting the output labels to a computing unit. The advantage is that appropriate actions can be performed in a timely manner.

According to one preferred use case, the output labels are ranked depending on their scores, e.g. low or high scores. The target label of the output labels is selected as best candidate for the input unit e.g. output label with the highest classification score or exceeding a threshold. Then, the target label is assigned to the input unit. After assignment, the input unit can be allocated to the target label, preferably, reference location.

A further aspect of the invention is a computing unit e.g. robot unit or another autonomous unit.

The unit may be realized as any devices, or any means, for computing, in particular for executing a software, an app, or an algorithm. For example, the unit may consist of or comprise a central processing unit (CPU) and/or a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

A further aspect of the invention is a computer program product directly loadable into an internal memory of a computer, comprising software code portions for performing the steps according to the aforementioned method when said computer program product is running on a computer.

4. Short description of the drawings

In the following detailed description, presently preferred embodiments of the invention are further described with reference to the following figures:

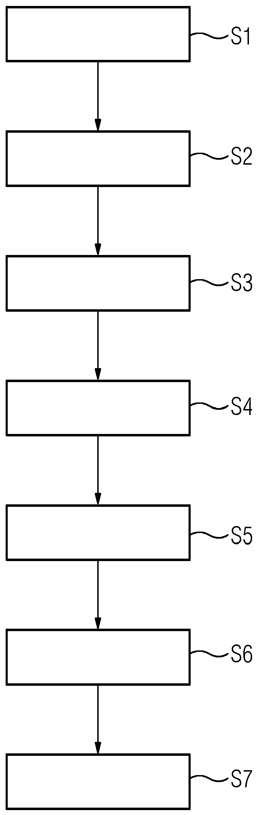

Fig. 1     illustrates a flowchart of the method according to the invention.

5. Detailed description of preferred embodiments

Figure 1 illustrates a flowchart of the method according to the invention with the method steps S1 to S7. In the first steps S1 - S3, the input data sets are provided in form of a graph database representation with its nodes and edges as well as labels.

According to an embodiment, time is measured in discrete steps. At each point in time $t \in \mathbb{N}$ e.g. the user selects a new component $v_{new}$ and the method steps are performed. Alternatively, this selection can be automatically performed.

The technical system at time t can be represented by a graph $G_t = (V_t, E_t)$, wherein the vertex set $V_t = (v_1, v_2, ..., v_{mt})$ comprises the configured units. $E \subset V \times V$ denotes the edge set (i.e., two units $v_i$, $v_j$ are connected if and only if $(v_i, v_j) \in E$). At each point in time when the user selects a new component or a new component is automatically added, the graph $G_t$ is expanded.

Each unit $v \in V$ comprises a feature vector $x_v \in \mathbb{R}^F$ that specifies its technical attributes (e.g. the voltage of a power adapter or environmental conditions). Accordingly, the vector can comprise one or more features.

The GNN can be denoted by the function symbol *f. f* takes as input the feature vector of a given center node $v$ with all the feature vectors of its neighboring nodes and produces a context-aware embedding $h_v \in \mathbb{R}^d$, where *d* denotes the embedding size. During training the trainable parameters (e.g., the parameters of the GNN) are trained in a supervised fashion to predict observed labels that were previously specified. Further, a graph pooling operation can be denoted with the function symbol *g. g* takes as input an unordered set of embedding vectors and produces a joint representation. Exemplary pooling operators are average, sum or max pooling.

Further, the set of all labels can be denoted with $L_t = \{l_1, l_2, ..., l_{nt}, l_{nt+1}\}$ that were entered until time *t*. The label $l_{nt+1}$ serves as placeholder for a new label that has not been specified yet. Moreover, a mapping can be denoted with $\tau : V_t \rightarrow L_t$ that specifies the label of each unit (i.e., $\tau(v_i)$ indicates the label of $v_i$ and the inverse image $\tau^{-1}(\{l_j\})$ indicates which components are assigned to location $l_j \in L_t$).

Generating an embedding for each node of the plurality of nodes using a machine learning algorithm based on the respective at least one node and corresponding at least one feature S4

For each unit $v$, the corresponding input feature vector $x_v$ is fed to *f*, resulting in an embedding $h_v$. Hence, an embedding $h_{new}$ for the node $v_{new}$ is accordingly obtained via *f*.

Generating a joint embedding for each label of the plurality of labels using a pooling operator based on the generated embeddings S5

For each label $l_j \in L_t$, the units which are assigned to that location are collected - given by $\tau^{-1}(\{l_j\})$. Then, the pooling operator $g$ is applied on $\{h_v\}_{v \in \tau^{-1}(\{l_j\})}$, resulting in a pooled representation for each label $l_j \in L_t$ denoted by $h_j^{(L)}$.

Determining a classification score for each label of the plurality of labels based on the respective embedding of the input unit and the generated joint embeddings S6

Moreover, a classification score $s_j$ is computed for each label $l_j \in L_t$ that indicates how likely it is to assign the new node $v_{new}$ to the label $l_j \in L_t$. Thereby, $s_j$ is computed based on $h_{new}$ and $h_j^{(L)}$ computed in the aforementioned steps, respectively. For example, $s_j$ can be derived via a simple dot-product. That means $s_j = <v_{new}, h_j^L>$. Alternatively, $v_{new}$ and $h_j^L$ can be concatenated and jointly be fed to a classifier such as a dense, feedforward neural network.

The score $s_j$ can be used for ranking. According to an embodiment, the user can select the units that come with the highest scores. The user can either select a label which was recommended or pick another label. According to another alternative embodiment, measures can be performed automatically in a timely manner after providing the labels as output in S7. Exemplary measures include selecting the target label of the provided labels depending on the scores and assigning the target label to the input unit.

If a new label is selected corresponding to $l_{n_t+1}$, the set of labels will be extended, accordingly $n_{t+1} \leftarrow n_t + 1$.

The pseudo code for the algorithm including the method steps S1 to S7 is as follows

1. $t \leftarrow 0$ ; \\ set initial time
2. $G_t \leftarrow \emptyset$ ; \\ initialize engineering system
3. $L_t \leftarrow \{l_1\}$ ; \\ initialize reference locations
4. $n_t \leftarrow 0$ ; \\ set initial number of reference locations
5. **While**{Engineering system is not finalized}

   {
6. User picks a component $v_{new}$ and adds it to $G\_t$
7. The GNN $f$ produces embeddings $h_i$ for every component in $G_t$
8. The pooling operator $g$ produces a joint embeddings $h_j^l$ for every reference location in $L_t$
   a. **For**{$l_j$ in $L_t$}

      {
9. compute a score $s_j \leftarrow <h_{new}, h_j^l>$;

      }
10. Sort the reference locations according to their scores and display them to the user
11. User selects a reference location $l_k$

```
\\ check whether a reference location was added
12. If {k == n_t + 1}
    {
    13. Update reference locations
    14. L_{t+1} ← L_t ∪ l_{n_{t+1}};
    15. n_{t+1} ← n_t + 1 ;
    }
16. Else
    {
    17. L_{t+1} ← L_t ;
    18. n_{t+1} ← n_t ;
    }
19. t ← t + 1 ; \\next time step
20. User can decide to finalize the engineering system or to continue adding
    components
}
```

**Claims**

1. Computer-implemented method for determining at least one output label for an input unit of a technical system; comprising the steps:

   a. Providing a graph data base representation (S1); wherein
   the graph data base representation represents a plurality of nodes in a graph which are interconnected by respective edges; wherein
   each node of the plurality of the nodes represents a unit of the technical system and is assigned to at least one node feature; wherein
   each edge of the plurality of the edges represents a relationship between the units;
   b. Extending the graph database representation with the received input unit (S2);
   c. Providing a plurality of labels (S3);
   d. Generating an embedding for each node of the plurality of nodes using a machine learning algorithm based on the respective at least one node and corresponding at least one node feature (S4);
   e. Generating a joint embedding for each label of the plurality of labels using a pooling operator based on the generated embeddings (S5);
   f. Determining a classification score for each label of the plurality of labels based on the respective embedding of the input unit and the generated joint embeddings (S6); wherein
   the classification score indicates how likely it is to assign the input unit to the regarded label; and
   g. Providing the plurality of labels as output labels with their corresponding scores (S7).

2. Computer-implemented method according to claim 1, wherein the graph database representation is a knowledge graph, preferably k-nearest neighbor (KNN) graph.

3. Computer-implemented method according to claim 1 or claim 2, wherein the machine learning algorithm is a graph neural network (GNN).

4. Computer-implemented method according to any of the preceding claims, wherein the method further comprises the step ranking the plurality of output labels in accordance with their respective scores.

5. Computer-implemented method according to claim 4, wherein the method further comprises the step displaying the ranked plurality of output labels on a display unit to a user for selecting a target label of the ranked plurality of output labels and assigning the target label of the ranked plurality of output labels to the input unit.

**6.** Computer-implemented method according to claim 4, wherein the method further comprises the step assigning a target label of the ranked plurality of output labels to the input unit of the technical system.

**7.** Computer-implemented method according to claim 6, wherein the target label with the highest classification score of the ranked plurality of output labels is assigned to the input unit of the technical system.

**8.** Computer-implemented method according to claim 6 or claim 7, wherein the method further comprises allocating the input unit to the assigned target label.

**9.** A computing unit for performing the method steps according to any of the preceding claims.

**10.** A computer program product directly loadable into an internal memory of a computer, comprising software code portions for performing the steps according to any of the claims 1 to 8 when said computer program product is running on a computer.

Europäisches
Patentamt

European
Patent Office

Office européen
des brevets

# EUROPEAN SEARCH REPORT

Application Number

EP 20 20 3212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 462 385 A1 (SIEMENS AG [DE]) 3 April 2019 (2019-04-03) * paragraphs [0007] - [0009], [0014] - [0021], [0043] - [0051] * ----- | 1-10 | INV. G05B19/418 G05B13/02 |
| A | CN 111 665 861 A (UNIV CHINA AGRICULTURAL) 15 September 2020 (2020-09-15) * paragraphs [0040] - [0131] * ----- | 1-10 | |

TECHNICAL FIELDS
SEARCHED        (IPC)

G06N
G06F

The present search report has been drawn up for all claims

| Place of search | Date of completion of the search | Examiner |
|---|---|---|
| The Hague | 1 April 2021 | Prokopiou, Platon |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&&& : member of the same patent family, corresponding
    document

EPO FORM 1503 03.82 (P04C01)

**EP 3 989 021 A1**

## ANNEX TO THE EUROPEAN SEARCH REPORT
## ON EUROPEAN PATENT APPLICATION NO.

EP 20 20 3212

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2021

| Patent document cited in search report | | Publication date | Patent family member(s) | | Publication date |
|---|---|---|---|---|---|
| EP 3462385 | A1 | 03-04-2019 | CN<br>EP<br>US | 109583562 A<br>3462385 A1<br>2019095806 A1 | 05-04-2019<br>03-04-2019<br>28-03-2019 |
| CN 111665861 | A | 15-09-2020 | NONE | | |

For more details about this annex : see Official Journal of the European Patent Office, No. 12/82